# EUROPEAN PATENT SPECIFICATION

(11) **EP 3 379 779 B1**
(45) Date of publication and mention of the grant of the patent: **11.03.2020**
(21) Application number: 18162405.7
(22) Date of filing: 16.03.2018
(51) Int. Cl.: H04L 12/707, H04L 12/741

(54) **INFORMATION PROCESSING APPARATUS, COMMUNICATION SYSTEM, METHOD OF CONTROLLING COMMUNICATION ROUTE, AND CARRIER MEANS**
INFORMATIONSVERARBEITUNGSVORRICHTUNG, KOMMUNIKATIONSSYSTEM, VERFAHREN ZUR STEUERUNG DES KOMMUNIKATIONSWEGES UND TRÄGERMITTEL
APPAREIL DE TRAITEMENT D'INFORMATIONS, SYSTÈME DE COMMUNICATION, PROCÉDÉ DE COMMANDE DE VOIE DE COMMUNICATION ET MOYENS DE SUPPORT

(30) Priority: 21.03.2017 JP 2017054900
(43) Date of publication of application: 26.09.2018
(73) Proprietor: Ricoh Company, Ltd., Tokyo 143-8555 (JP)
(72) Inventor: OTA, Hiroshi, Ohta-ku, Tokyo 143-8555 (JP)
(74) Representative: Watkin, Timothy Lawrence Harvey

(56) References cited:
- EP-A1- 2 587 780
- US-A1- 2001 013 067
- US-A1- 2013 215 457
- US-A1- 2016 088 184

## Description

### BACKGROUND

### Technical Field

The present invention relates to an information processing apparatus, a communication system, a method of controlling a communication route, and a storage medium or carrier means.

### Background Art

Conventionally, when a large-scale communication system is to be introduced into organizations such as companies, the large-scale communication system may be configured with a plurality of networks having different security levels and different purposes of use. The communication system can be configured to share one image forming apparatus among a plurality of networks to reduce a management cost of the image forming apparatuses and save an installing space of the image forming apparatuses.

Japanese Patent No. 5913258 discloses a system including user terminals, a Web server, and a plurality of relay devices connected at a plurality of service paths between the user terminals and the Web server, in which the service paths can be switched by using the relay devices based on an analysis result of a hypertext transfer protocol (HTTP) request.

If, for example, a plurality of networks having the same network address is connected to one single information processing apparatus, there is a possibility that a plurality of network devices having the same internet protocol (IP) address may exist on the plurality of networks connected to the information processing apparatus. In this case, there is a possibility that the information processing apparatus cannot determine to which network device communication data is to be transmitted from the information processing apparatus, or there is a possibility that the information processing apparatus may transmit communication data to an inappropriate network device.

US Patent Application No. 09/775975 discloses a data transmission apparatus for transmitting data received from a user terminal device through a plurality of networks to a destination device, the user terminal device executing communication using an Internet protocol.

European Patent Publication No. EP2587780 (A1) discloses an image forming system for receiving a user request for a change in network settings between a plurality of network interfaces defined in a routing table and networks, editing the defined network settings based on the received user request, and storing the routing table.

### SUMMARY

In one aspect of the present invention, an information processing apparatus in accordance with claim 1 is provided. In another aspect of the present invention, a communication system in accordance with claim 7 is provided.

In another aspect of the present invention, a method of controlling a communication route for an information processing apparatus in accordance with claim 8 is provided.

The invention is defined by the appended claims.

### BRIEF DESCRIPTION OF THE DRAWINGS

A more complete appreciation of the description and many of the attendant advantages and features thereof can be readily obtained and understood from the following detailed description with reference to the accompanying drawings, wherein:
FIG. 1 illustrates an example of a configuration of a communication system according to an embodiment of the present invention;
FIG. 2 illustrates an example of network addresses of each of networks in the communication system of FIG. 1;
FIG. 3 illustrates an example of IP addresses of devices disposed in the communication system of FIG. 1;
FIG. 4 illustrates an example of a hardware block diagram of a multifunction peripheral (MFP) used in the communication system of FIG. 1;
FIG. 5 illustrates an example of a functional block diagram of the MFP of FIG. 4; FIG. 6 illustrates an example of a connection table used in the communication system of FIG. 1;
FIG. 7 illustrates an example of an application routing setting table (each user) used in the communication system of FIG. 1;
FIG. 8 illustrates an example of an application routing setting table (each group) used in the communication system of FIG. 1;
FIG. 9 illustrates an example of a transport routing setting table used in the communication system of FIG. 1;
FIG. 10 illustrates an example of a network identifier routing setting table used in the communication system of FIG. 1;
FIG. 11 illustrates an example of a network routing setting table used in the communication system of FIG. 1;
FIGs. 12A and 12B illustrates examples of setting screens of an address book in the MFP of FIG. 4;
FIG. 13 is a flowchart illustrating a procedure of a routing destination determination process by the MFP of FIG. 4;
FIG. 14 is a flowchart illustrating a procedure of a routing destination determination process based on various types of routing settings by the MFP of FIG. 4; and
FIG. 15 illustrates a sequence diagram of a procedure of a setting value acquisition process in the communication system of FIG. 1.

The accompanying drawings are intended to depict embodiments of the present invention and should not be interpreted to limit the scope thereof. The accompanying drawings are not to be considered as drawn to scale unless explicitly noted.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Hereinafter, a description is given of an embodiment of the present invention with reference to the drawings.

### Communication System:

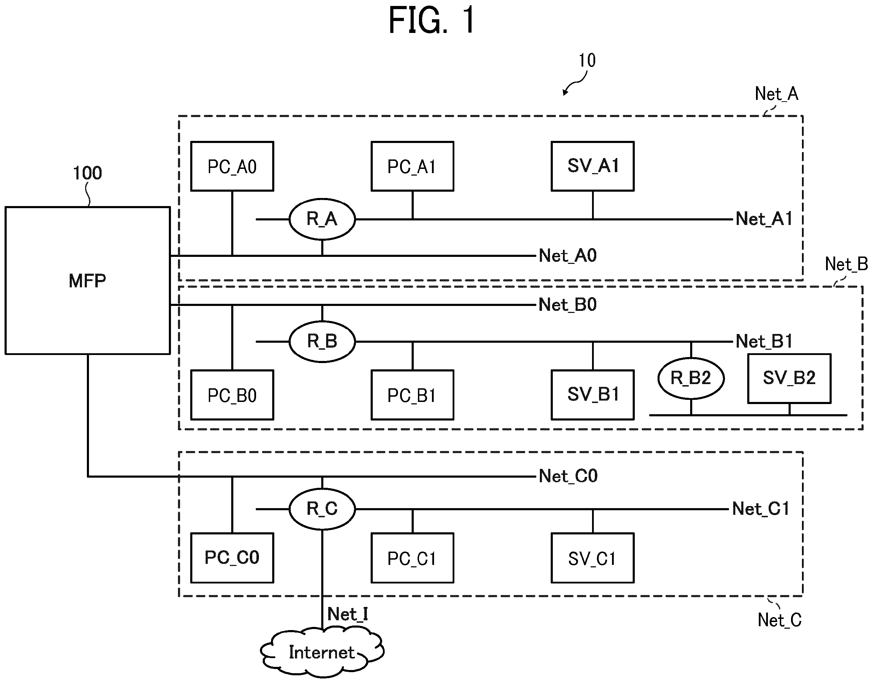

FIG. 1 illustrates an example of a configuration of a communication system 10 according to an embodiment of the present invention. As illustrated in FIG. 1, the communication system 10 includes, for example, a plurality of network systems Net_A, Net_B and Net C, and a multifunction peripheral (MFP) 100.

The MFP 100 is an example of an information processing apparatus in this description. The MFP 100 has a plurality of image processing functions such as a copy function, a scanning function, a facsimile function, and a printer function. As illustrated in FIG. 1, the MFP 100 is connected to each of network systems Net_A, Net_B and Net_C wirelessly and/or by wire. Therefore, the MFP 100 can transmit and receive various types of communication data to and from one or more network devices disposed in each of the network systems Net_A, Net_B and Net_C.

Further, as illustrated in FIG. 1, the network system Net_A includes, for example, networks Net_A0 and Net_A1. The networks Net_A0 and Net-A1 are connected to each other via a router R_A.

Further, as illustrated in FIG. 1, the network system Net_B includes, for example, networks Net_B0 and Net_B1. The networks Net_A0 and Net Bl are connected to each other via a router R_B.

Further, as illustrated in FIG. 1, the network system Net C includes, for example, networks Net_C0 and Net_C1. The networks Net_A0 and Net_C1 are connected to each other via a router R_C. Further, the networks Net_C0 and Net_C1 are connected to an Internet Net_I via the router R_C.

In the above described configuration, each of the network systems Net_A, Net_B and Net C is separated from other network systems. Therefore, each of the network systems Net_A, Net B and Net C cannot perform the internet protocol (IP) communication with other network systems.

In FIG. 1, one or more network devices denoted by "PC " are personal computers. In FIG. 1, one or more network devices denoted by "SV_" are servers. In FIG. 1, one or more network devices denoted by "R " are routers.

### Network Address:

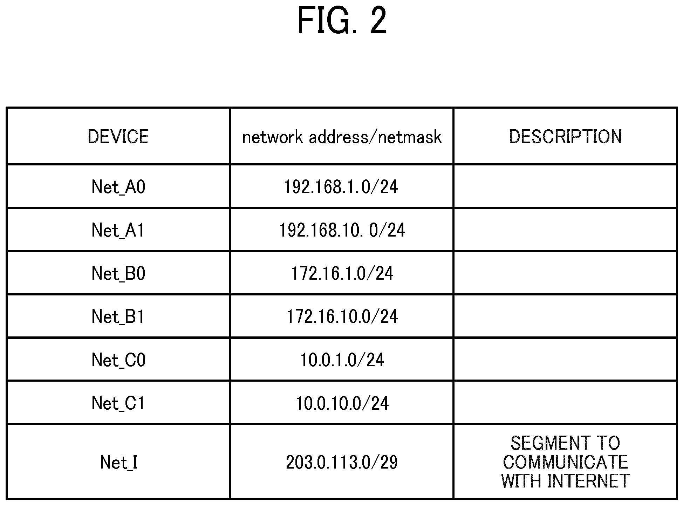

FIG. 2 illustrates an example of network addresses of each of the networks in the communication system 10. As illustrated in FIG. 2, each network in the communication system 10 is set with a specific network address, which is not the same with other network addresses of other networks.

### IP Address of Device:

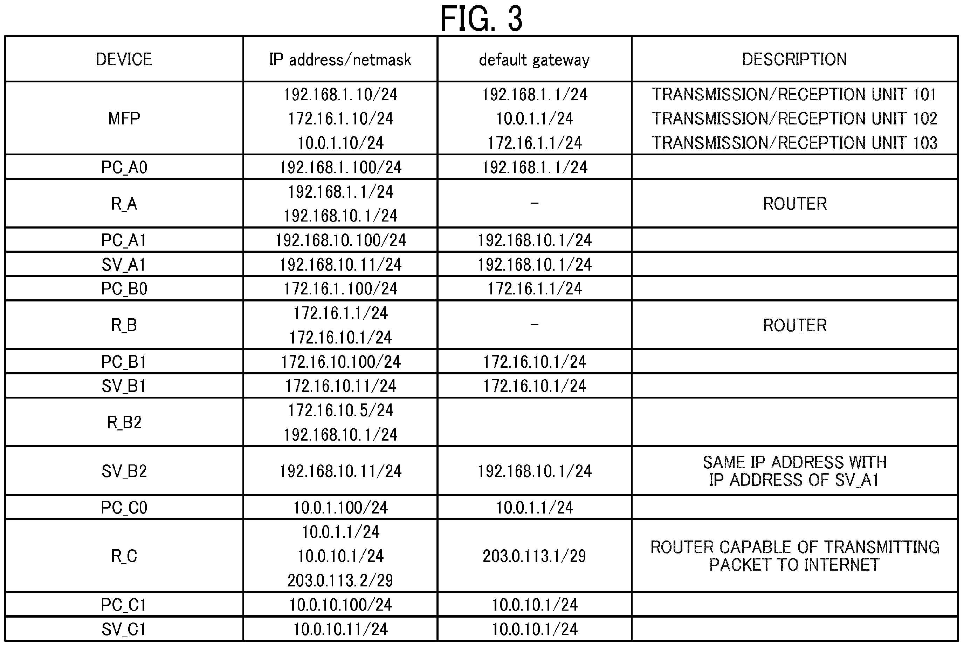

FIG. 3 illustrates an example of internet protocol (IP) addresses of devices disposed in the communication system 10. As illustrated in FIG. 3, an IP address and a default gateway are set for each device disposed in the communication system 10. In this configuration, the MFP 100 is assigned with IP addresses respectively corresponding to the networks connected to the MFP 100. Further, each of the routers R_A, R_B and R_C is assigned with IP addresses respectively corresponding to the networks connected to each of the routers R_A, R_B and R_C.

### Hardware Configuration of MFP:

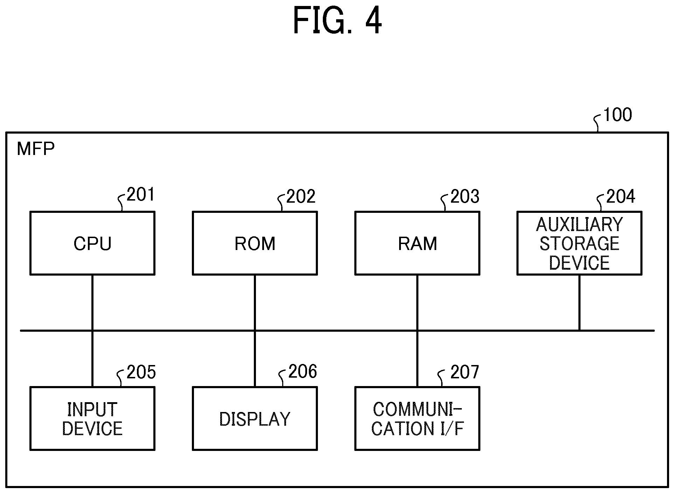

FIG. 4 illustrates an example of a hardware block diagram of the MFP 100. As illustrated in FIG. 4, the MFP 100 includes, for example, a central processing unit (CPU) 201, read only memory (ROM) 202, random access memory (RAM) 203, an auxiliary storage device 204, an input device 205, a display 206 and a communication interface (I/F) 207. These hardware resources are connected to each other via a bus.

The CPU 201 executes various programs stored in the ROM 202 or the auxiliary storage device 204. The ROM 202 is a nonvolatile memory. For example, the ROM 202 stores various programs to be executed by the CPU 201, and data required for executing the various programs by the CPU 201. The RAM 203 is a main storage device, such as dynamic random access memory (DRAM) and static random access memory (SRAM). For example, the RAM 203 functions as a working area to be used by the CPU 201 when the CPU 201 executes the various programs.

The auxiliary storage device 204 is a non-volatile memory. For example, the auxiliary storage device 204 stores various programs to be executed by the CPU 201, and data required for executing the various programs by the CPU 201. The input device 205 is used when an operator (e.g., network administrator) performs various kinds of settings (e.g., network settings) to the MFP 100. For example, the input device 205 may be implemented by a keyboard, a mouse, and a touch panel. The display 206 displays various display screens (e.g., network setting screen), and may be implemented, for example, by a liquid crystal display (LCD). The communication I/F 207 is an interface to connect the MFP 100 with each of the network systems Net_A, Net_B and Net C to perform communication with other information processing apparatuses. Functional Configuration of MFP:

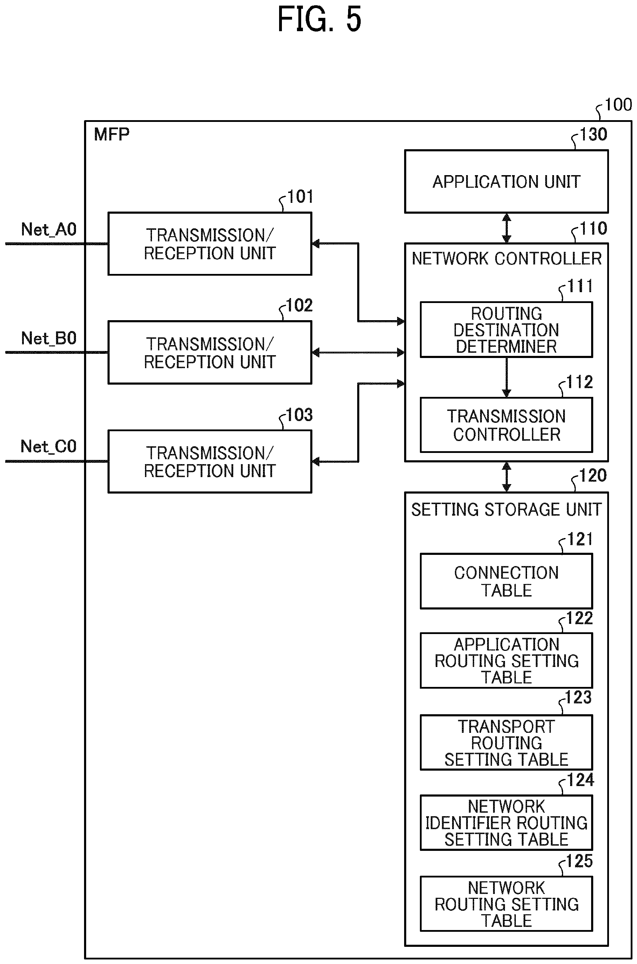

FIG. 5 illustrates an example of a functional block diagram of the MFP 100. As illustrated in FIG. 5, the MFP 100 includes, for example, a plurality of transmission/reception units 101, 102 and 103. The MFP 100 further includes, for example, a network controller 110, a setting storage unit 120, and an application unit 130.

The transmission/reception unit 101 connects the MFP 100 to the network Net_A0, and transmits and receives communication data between the MFP 100 and each device disposed in the network system Net_A. The transmission/reception unit 102 connects the MFP 100 to the network Net_B0, and transmits and receives communication data between the MFP 100 and each device disposed in the network system Net B. The transmission/reception unit 103 connects the MFP 100 to the network Net_C0, and transmits and receives communication data between the MFP 100 and each device disposed in the network system Net_C. Further, the MFP 100 and each of the networks Net_A0, Net BO and Net_C0 can be connected with each other using various types of connections such as wired connection, a wireless local area network (LAN) connection, a dialup connection, and so forth.

The network controller 110 controls transmission and reception of communication data with respect to each of the networks, in which the communication data is to be used by the application unit 130. For example, when at least any one of the transmission/reception units 101, 102 and 103 receives communication data transmitted from an external network device, the network controller 110 transmits the received communication data to the application unit 130. Further, when the network controller 110 receives a transmission request of communication data from the application unit 130, the network controller 110 transmits the communication data to the external network device via at least any one of the transmission/reception units 101, 102 and 103.

As illustrated in FIG. 5, the network controller 110 includes, for example, a routing destination determiner 111 and a transmission controller 112 related to transmission of the communication data.

When the routing destination determiner 111 transmits communication data to an external network device, the routing destination determiner 111 determines a routing destination of the communication data such as a network and a next hop. Specifically, the routing destination determiner 111 determines the routing destination of the communication data based on a connection table 121, an application routing setting table 122, a transport routing setting table 123, a network identifier routing setting table 124 and a network routing setting table 125, which are stored in the setting storage unit 120.

For example, the routing destination determiner 111 determines a network and a next hop, associated with a user of the transmission destination of the communication data in advance, as the network and the next hop of the routing destination of the communication data based on the application routing setting table 122. Further, for example, the routing destination determiner 111 determines a network and a next hop, associated with a used port number of the communication data in advance, as the network and the next hop of the routing destination of the communication data based on the transport routing setting table 123.

The transmission controller 112 transmits the communication data to the network and the next hop determined as the routing destination by the routing destination determiner 111.

For example, if the network of the routing destination determined by the routing destination determiner 111 is the network Net AO or the network Net_A1, the transmission controller 112 transmits the communication data to the network Net AO or the network Net A_1 via the transmission/reception unit 101.

Further, for example, if the network of the routing destination determined by the routing destination determiner 111 is the network Net_B0 or the network Net_B 1, the transmission controller 112 transmits the communication data to the network Net BO or the network Net_B 1 via the transmission/reception unit 102.

Further, for example, if the network of the routing destination determined by the routing destination determiner 111 is the network Net_C0 or the network Net_C1, the transmission controller 112 transmits the communication data to the network Net CO or the network Net_C1 via the transmission/reception unit 103.

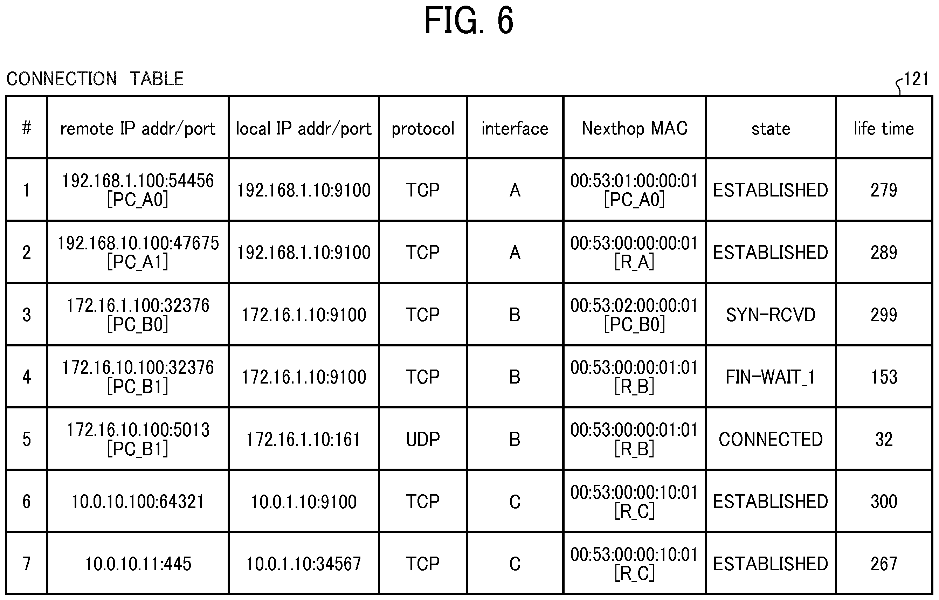

As illustrated in FIG. 5, the setting storage unit 120 stores various tables to be used by the network controller 110. Specifically, the setting storage unit 120 stores, for example, the connection table 121, the application routing setting table 122, the transport routing setting table 123, the network identifier routing setting table 124, and the network routing setting table 125. The details of each table is to be described later with reference to FIGs. 6 to 11.

Further, when the network controller 110 performs a specific communication with an external network device, the network controller 110 stores communication connection information related to the specific communication connection in the connection table 121 stored in the setting storage unit 120. The communication connection information includes, for example, "IP address/port of counterpart device (remote IP address/port)," "local IP address/port of one device (local IP address/port)," "protocol," "interface," "media access control (MAC) address of next hop (Nexthop MAC)," "communication state (state)" and "life time." In this configuration, the one device is, for example, the MFP 100 including the network controller 110, which performs the specific communication with the external network device used as the counterpart device.

The "interface" is set with which interface (e.g., transmission/reception unit) is used for the communication connection. For example, in a case of the communication connection by the transmission/reception unit 101 (i.e., communication connection with a network device on the network system Net_A), "A" is set for the "interface." In a case of the communication connection by the transmission/reception unit 102 (i.e., communication connection with a network device on the network system Net B), "B" is set for the "interface." In a case of the communication connection by the transmission/reception unit 103 (i.e., communication connection with a network device on the network system Net_C), "C" is set for the "interface."

The "life time" is set as a given time period when a communication connection is established. The setting value of the "life time" continuously decreases when no communication is performed while the communication connection is being established. When the setting value in the "life time" becomes zero (0), the communication connection information related to the specific communication connection is deleted from the connection table 121. If the "protocol" is "transmission control protocol (TCP)," the "communication state (state)" is set with a state of the TCP. Further, if the "protocol" is "user datagram protocol (UDP)," the "communication state (state)" is set with "CONNECTED" indicating that the connection is being established.

The application unit 130 executes various applications included in the MFP 100, such as a copy application, a scan application, a facsimile application and a printer application. For example, when any one of the transmission/reception units 101, 102 and 103 receives a print request from an external network device, the application unit 130 receives the print request from the network controller 110, and then executes printing in accordance with the print request. Then, the application unit 130 transmits response data indicating an execution result of the printing to the external network device, which has transmitted the print request (transmission source of the print request). In this case, the network controller 110 controls the transmission of the response data. Further, for example, the application unit 130 executes the scanning in accordance with a user operation on the MFP 100. Then, the application unit 130 transmits the scanned data acquired by the scanning to an external network device designated by the user. In this case, the network controller 110 controls the transmission of the scanned data.

Each of the above described functions of the MFP 100 is implemented when the CPU 201 executes, for example, the program stored in the ROM 202 or the auxiliary storage device 204. The program may be provided to the MFP 100 by installing the program in the MFP 100 as a default program, or may be provided from an external apparatus or system to the MFP 100. When the program is provided from the external apparatus or system to the MFP 100, the program may be provided by an external storage medium such as a universal serial bus (USB) memory device, a memory card, and a compact disc read only memory (CD-ROM), or may be downloaded from a server on a network such as the Internet.

### Connection Table:

FIG. 6 illustrates an example of a connection table 121. The connection table 121 stores communication connection information related to a plurality of communication connection routes. As illustrated in FIG. 6, the connection table 121 includes, for example, seven communication connection information indicated by the numbers 1 to 7, in which each communication connection information includes, for example, "IP address/port of counterpart device (remote IP address/port)," "local IP address/port of one device (local IP address/port)," "protocol" "interface," "media access control (MAC) address of next hop (Nexthop MAC)," "communication state (state)" and "life time" as data items For example, each communication connection information is set in the connection table 121 when the communication connection is established, and each communication connection information is deleted from the connection table 121 when the communication connection is disconnected or terminated.

### Application Routing Setting Table (Each User):

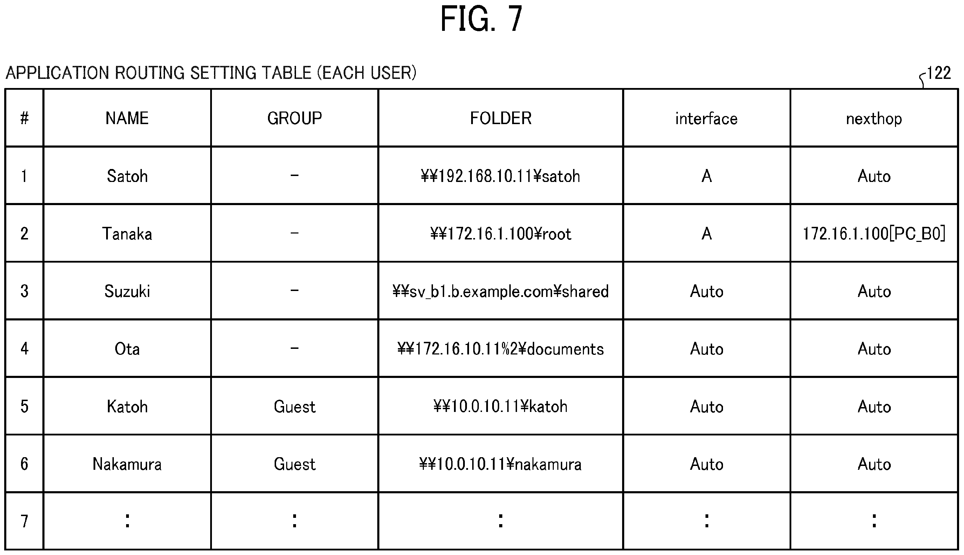

FIG. 7 illustrates an example of the application routing setting table 122 storing information of each user. The application routing setting table 122 is set with application routing setting information related to the routing destination of the communication data for each user included in one or more address books used by the application unit 130. In an example case of FIG. 7, the application routing setting table 122 is set with the application routing setting information related to each user indicated by the numbers of 1 to 7, in which each application routing setting information includes, for example, "name," "group," "folder," "interface" and "nexthop" as data items.

In an example case of FIG. 7, the application routing setting information "1" sets "Satoh" in the "name," "A" in the "interface," and "Auto" in the "nexthop." The "A" indicates the transmission/reception unit 101, that is, the network system Net_A. Further, the "Auto" indicates the default gateway (see FIG. 3) of the transmission/reception unit 101. Therefore, the routing destination determiner 111 can determine the network system Net_A as the network, and the default gateway of the transmission/reception unit 101 as the next hop, which are used as the routing destination of the communication data with respect to the user "Satoh," based on the application routing setting information "1".

In the example case of FIG. 7, the application routing setting information "2" sets "Tanaka" in the "name," "A" in the "interface," and an IP address (172.16.1.100) of the network device PC_B0 in the "nexthop." The network device PC_B0 is one of the network devices disposed on the network system Net B. In this case, the routing destination determiner 111 can ignore the setting "A" in the "interface" and determine the network device PC_B0 as the next hop, which are used as the routing destination of the communication data with respect to the user "Tanaka" based on the application routing setting information "2".

In the example of FIG. 7, the application routing setting information "3" sets "Suzuki" in the "name," "Auto" in the "interface," and "Auto" in the "nexthop." In this case, the routing destination determiner 111 cannot determine the routing destination of the communication data with respect to the user "Tanaka" based on the application routing setting information "3" alone. Therefore, the routing destination determiner 111 determines the routing destination of the communication data with respect to the user "Suzuki" based on other routing setting.

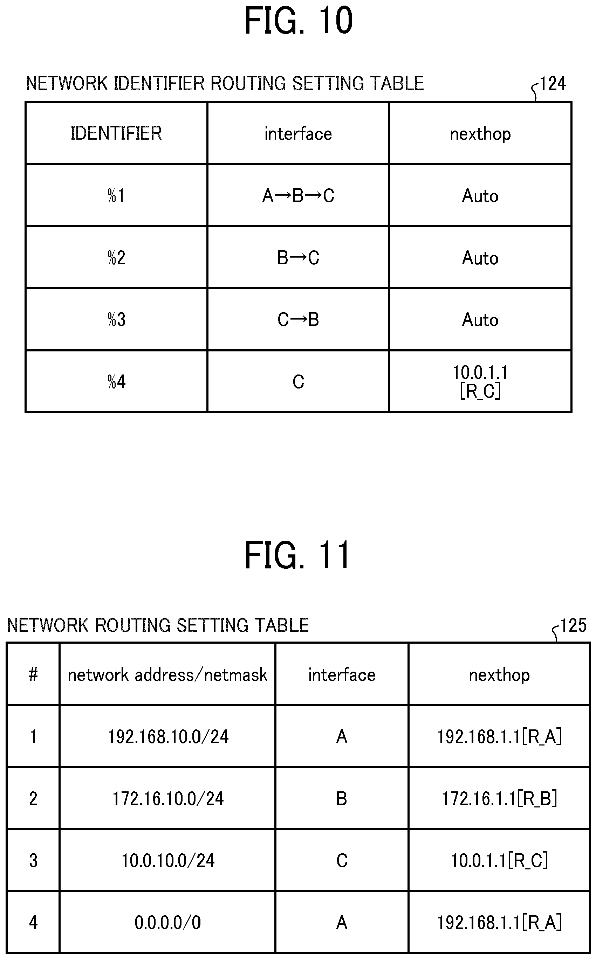

In the example case of FIG. 7, the application routing setting information "4" sets "Ota" in the "name," "Auto" in the "interface," and "Auto" in the "nexthop." The application routing setting information "4" also sets a setting value including a network identifier "%2" in the "folder." In this case, the routing destination determiner 111 determines the routing destination of the communication data with respect to the user "Ota" based on a network identifier routing setting (see FIG. 10) associated with the network identifier "%2."

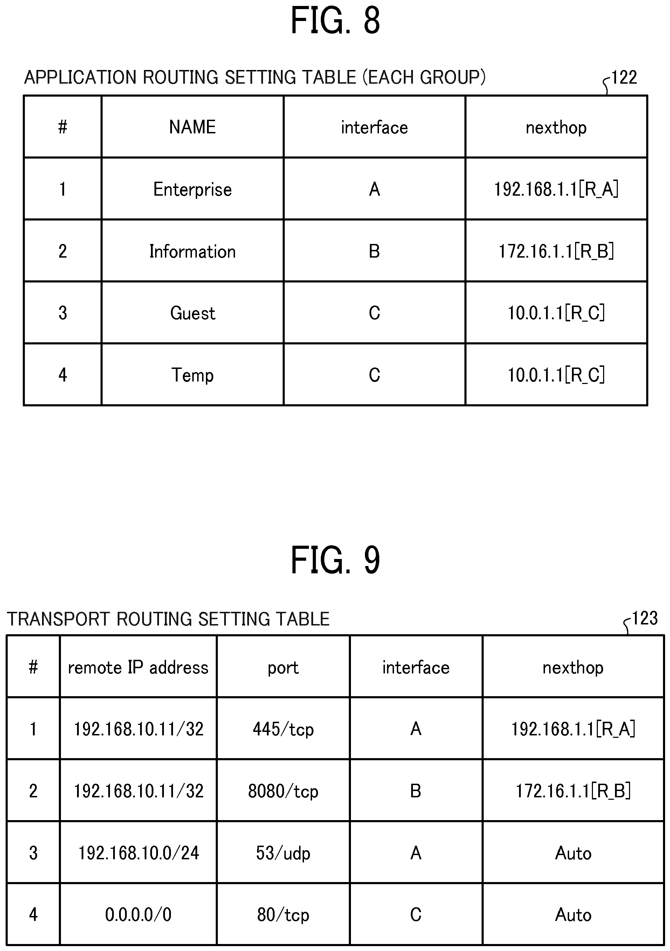

In the example case of FIG. 7, the application routing setting information "5" and "6" respectively set "Katoh" and "Nakamura" in the "name," "Auto" in the "interface," and "Auto" in the "nexthop." The application routing setting information "5" and "6" also set a group name "Guest" in the "group." In this case, the routing destination determiner 111 determines the routing destination of the communication data with respect to the users "Katoh" and "Nakamura" based on the application routing setting (see FIG. 8) associated with the user group name of "Guest."

### Application Routing Setting Table (Each Group):

FIG. 8 illustrates an example of an application routing setting table 122 storing information of each group. The application routing setting table 122 is set with application routing setting information related to the routing destination of the communication data for each group included in one or more address books used by the application unit 130. In an example case of FIG. 8, the application routing setting table 122 is set with four application routing setting information indicated by the numbers of 1 to 4, in which each application routing setting information includes, for example, "name," "interface," and "nexthop" as data items.

In an example case of FIG. 8, the application routing setting information "3" sets "Guest" in the "name," "C" in the "interface," and an IP address (10.0.1.1) of the router R_C in the "nexthop." The "C" indicates the transmission/reception unit 103 (i.e., network system Net C). Therefore, the routing destination determiner 111 can determine the network system Net C as the network and router R_C as the next hop, which are used as the routing destination of the communication data with respect to the user belonging to the user group "Guest" based on the application routing setting information "3."

As illustrated in FIGs. 7 and 8, since the application routing setting table 122 set for each user, and the application routing setting table 122 set for each group are provided, for example, any user can be selected from one or more address books as the transmission destination of the scanned data when the application unit 130 executes the scanning application. In this case, the routing destination determiner 111 can refer to the application routing setting information related to a target user set in the application routing setting table 122 (each user) to determine the routing destination of the scanned data with respect to the target user. Alternatively, the routing destination determiner 111 can refer to the application routing setting information related to a user group, to which the target user belongs, set in the application routing setting table 122 (each group) to determine the routing destination of the scanned data with respect to the target user. Transport Routing Setting Table:
FIG. 9 illustrates an example of the transport routing setting table 123. The transport routing setting table 123 is set with transport routing setting information related to the routing destination of the communication data for each one of combinations of the IP address and the used port number of one or more counterpart devices. In an example case of FIG. 9, the transport routing setting table 123 is set with four transport routing setting information indicated by the numbers of 1 to 4, in which each transport routing setting information includes, for example, "remote IP address," "port," "interface," and "nexthop" as data items.

In the example case of FIG. 9, the transport routing setting information "1" sets "192.168.10.11/32" in the "remote IP address," "445/tcp" in the "port," "A" in the "interface," and an IP address (192.168.1.1) of the router R_A in the "nexthop." The "A" indicates the transmission/reception unit 101 (i.e., network system Net A). Therefore, the routing destination determiner 111 can determine the network system Net A as the network and the router R_A as the next hop, which are used as the routing destination of the communication data based on the transport routing setting information "1."

In the example case of FIG. 9, the transport routing setting information "2" sets "192.168.10.11/32" in the "remote IP address," "8080/tcp" in the "port," "B" in the "interface," and an IP address (172.16.1.1) of the router R_B in the "nexthop." The "B" indicates the transmission/reception unit 102 (i.e., network system Net_B). Therefore, the routing destination determiner 111 can determine the network system Net B as the network and the router R_B as the next hop, which are used as the routing destination of the communication data based on the transport routing setting information "2."

In the example case of FIG. 9, the transport routing setting information "3" sets "192.168.10.0/24" in the "remote IP address," "53/udp" in the "port," "A" in the "interface," and "Auto" in the "nexthop." Therefore, the routing destination determiner 111 can determine the network system Net A as the network and the default gateway of the transmission/reception unit 101 as the next hop, which are used as the routing destination of the communication data based on the transport routing setting information "3".

In the example case of FIG. 9, the transport routing setting information "4" sets "0.0.0.0/0" in the "remote IP address," "80/tcp" in the "port," "C" in the "interface," and "Auto" in the "nexthop." The "C" indicates the transmission/reception unit 103 (i.e., network system Net C). Therefore, the routing destination determiner 111 can determine the network system Net_C as the network and the default gateway of the transmission/reception unit 103 as the next hop, which are used as the routing destination of all of communication data, which use the port "80/tcp," based on the transport routing setting information "4."

Further, if a plurality of concerned transport routing setting information exists in the transport routing setting table 123, the routing destination determiner 111 may determine priority of each information by using a given method (e.g., the order of description, the longest match algorithm), and may preferentially use the transport routing setting information having higher priority.

### Network Identifier Routing Setting Table:

FIG. 10 illustrates an example of the network identifier routing setting table 124. The network identifier routing setting table 124 is set with network identifier routing setting information related to the routing destination of the communication data for each network identifier. As illustrated in FIG. 10, the network identifier routing setting table 124 is set with network identifier routing setting information, in which each network identifier routing setting information includes, for example, "identifier," "interface," and "nexthop" as data items.

In an example case of FIG. 10, the network identifier routing setting information setting "%1" in the "identifier" sets "A, B, C" in the "interface," and "Auto" in the "nexthop."

In this case, the routing destination determiner 111 first determines the network system Net_A as the network and the default gateway of the transmission/reception unit 101 as the next hop, which are used as the routing destination of the communication data.

In this case, if the routing of the communication data from the transmission/reception unit 101 fails, the routing destination determiner 111 then determines the network system Net B as the network and the default gateway of the transmission/reception unit 102 as the next hop, which are used as the routing destination of the communication data.

Then, if the routing of the communication data from the transmission/reception unit 102 further fails, the routing destination determiner 111 further determines the network system Net_C as the network and the default gateway of the transmission/reception unit 103 as the next hop, which are used as the routing destination of the communication data.

The above described success or failure of the routing of the communication data can be checked by, for example, experimentally transmitting an inquiry packet, such as address resolution protocol (ARP) request, and then determining whether a normal response is obtained.

### Network Routing Setting Table:

FIG. 11 illustrates an example of the network routing setting table 125. The network routing setting table 125, which is one type of the routing table, is set with network routing setting information set for each network address. As illustrated in FIG. 11, the network routing setting table 125 is set with, for example, four network routing setting information indicated by the numbers of 1 to 4, in which each network routing setting information includes, for example, "network address/netmask," "interface," and a "nexthop" as data items. The routing destination determiner 111 can determine a routing destination by performing the matching process using the longest match algorithm based on the network routing setting table 125.

### Setting Screen of Address Book:

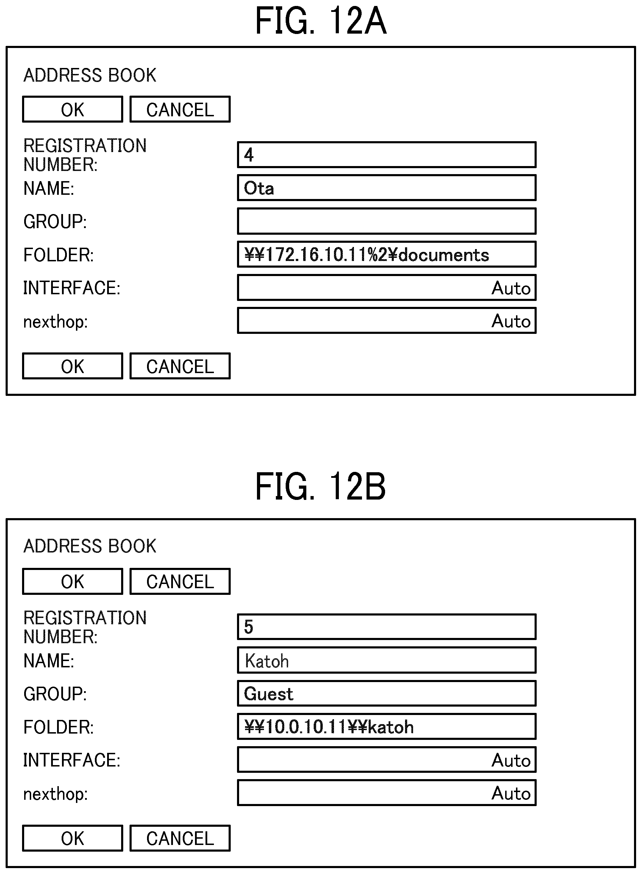

FIGs. 12A and 12B illustrates examples of setting screens of an address book in the MFP 100. When a user is to register address information in an address book to be used by the application unit 130, each of the setting screens of address book (hereinafter, address book setting screen) illustrated in FIGs. 12A and 12B is displayed on a display of an apparatus (e.g., MFP 100, a network device connected to the MFP 100) where the registration is to be performed. In example cases illustrated in FIGs. 12A and 12B, the address book setting screen includes, for example, data items of "registration number," "name," "group," "folder," "interface," and "nexthop," to which values can be registered. Then, the address information set in the address book setting screen is registered in an address book application, and also in the application routing setting table 122 (each user) as the application routing setting information.

As to the address book setting screens of FIGs. 12A and 12B, information specifying the transmission destination of the communication data can be also registered in addition to usual address information. For example, as to the address book setting screens of FIGs. 12A and 12B, the "interface" and the "nexthop" are added as the data items that can be registered in the address information. In this configuration, the "interface" can be set with a value (e.g., any one of "A, B and C") identifying the interface (e.g., transmission/reception unit) to be used when transmitting the communication data. Further, the "nexthop" can be set with the IP address of the next hop. With this configuration, the routing destination determiner 111 can determine the transmission destination of the communication data based on the setting values of the data items of "interface" and "nexthop," included in the application routing setting information, which are registered from the address book setting screen.

As illustrated in FIGs. 12A and 12B, the "interface" and the "nexthop" can be set with "Auto." The "Auto" means the connection is dependent on other settings.

For example, in an example case of FIG. 12A, the setting process is performed for a user "Ota," in which a setting value including a network identifier "%2" is set in the "folder." In this case, the routing destination determiner 111 can determine that the routing destination of the communication data with respect to the user "Ota" based on the network identifier routing setting (see FIG. 10) corresponding to the network identifier "%2."

Further, in an example case of FIG. 12B, the setting process is performed for a user "Katoh," in which a user group name of "Guest" is set as the setting value in the "group". In this case, the routing destination determiner 111 can determine that the routing destination of the communication data with respect to the user "Katoh" based on the application routing setting (see FIG. 8) corresponding to the user group name of "Guest."

### Procedure of Routing Destination Determination Process:

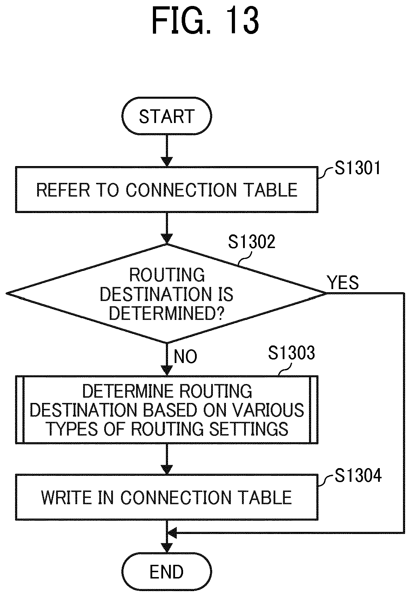

FIG. 13 is a flowchart illustrating a procedure of the routing destination determination process by the MFP 100. This process is executed by the routing destination determiner 111 when the communication data is to be transmitted from the application unit 130 in the MFP 100.

First, the routing destination determiner 111 refers to the connection table 121, stored in the setting storage unit 120, to attempt to determine the transmission destination of the communication data (step S1301). Specifically, the routing destination determiner 111 checks whether the concerned communication connection information is registered in the connection table 121 by using the IP address and the used port number related to the transmission destination of the communication data as search keys. If the concerned communication connection information is registered in the connection table 121, the routing destination determiner 111 acquires the values set in the data items of "interface" and "Nexthop MAC" of the concerned communication connection information.

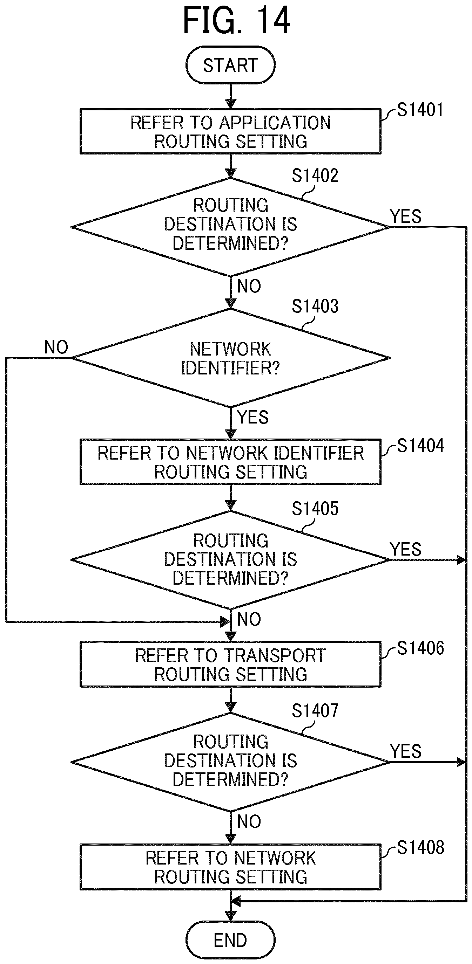

Then, the routing destination determiner 111 determines whether the transmission destination (or routing destination) is determined in step S1302 (step S1302). If the routing destination determiner 111 determines that the transmission destination is determined in step S1302 (step S1302: YES), the routing destination determiner 111 ends a series of processes illustrated in FIG. 13. On the other hand, if the routing destination determiner 111 determines that the transmission destination is not determined in step 51302 (step S1302: NO), the routing destination determiner 111 executes the routing destination determination process based on various types of routing settings (see FIG. 14) to determine the transmission destination of the communication data (step S1303).

Then, the routing destination determiner 111 writes the communication connection information that specifies the transmission destination determined in step 51303 in the connection table 121 (step S1304). Then, the routing destination determiner 111 ends a series of processes illustrated in FIG. 13. Although the process of step S1304 can be omitted, if the communication connection information is written in this manner, the routing destination determiner 111 can refer to the connection table 121 to determine the transmission destination of the communication data when transmitting the communication data to the same network device at the next occasion. FIG. 13 illustrates one example of procedures, and the procedure is not limited thereto. For example, the order of the processes may be changed, such as referring to the connection table 121 after executing the routing destination determination process based on the various types of routing settings.

### Procedure of Routing Destination Determination Process based on Various Types of Routing Setting:

FIG. 14 is a flowchart illustrating a procedure of the routing destination determination process based on various types of routing settings by the MFP 100. Hereinafter, a description is given of details of the routing destination determination process based on the various types of routing settings performed in step S1303 in the flowchart of FIG. 13.

First, the routing destination determiner 111 refers to the application routing setting table 122, stored in the setting storage unit 120, to attempt to determine the transmission destination of the communication data (step S1401). Specifically, the routing destination determiner 111 checks whether the concerned application routing setting information is registered in the application routing setting table 122 by using the user name and the user group name of the user of the transmission destination of the communication data as search keys. If the concerned application routing setting information is registered in the application routing setting table 122, the routing destination determiner 111 acquires the values set in the data items of "interface" and "nexthop" of the concerned application routing setting information.

Then, the routing destination determiner 111 determines whether the transmission destination is determined (step S1402). If the routing destination determiner 111 determines that the transmission destination is determined in step S1402 (step S1402: YES), the routing destination determiner 111 ends a series of processes illustrated in FIG. 14. On the other hand, if the routing destination determiner 111 determines that the transmission destination is not determined in step S1402 (step S1402: NO), the routing destination determiner 111 determines whether a network identifier is included in the concerned application routing setting information referred in step S1401 (step S1403).

If the routing destination determiner 111 determines that the network identifier is not included in step S1403 (step S1403: NO), the routing destination determiner 111 proceeds the sequence to step S1406. On the other hand, if the routing destination determiner 111 determines that the network identifier is included in step S1403 (step S1403: YES), the routing destination determiner 111 refers to the network identifier routing setting table 124, stored in the setting storage unit 120, to attempt to determine the transmission destination of the communication data (step S1404).

Then, the routing destination determiner 111 determines whether the transmission destination (or routing destination) is determined in step S1405. If the routing destination determiner 111 determines that the transmission destination is determined in step S1405 (step S1405: YES), the routing destination determiner 111 ends a series of processes illustrated in FIG. 14. On the other hand, if the routing destination determiner 111 determines that the transmission destination is not determined in step S1405 (step S1405: NO), the routing destination determiner 111 proceeds the sequence to step S1406.

In step S1406, the routing destination determiner 111 refers to the transport routing setting table 123, stored in the setting storage unit 120, to attempt to determine the transmission destination of the communication data. Specifically, the routing destination determiner 111 checks whether the concerned transport routing setting information is registered in the transport routing setting table 123 by using the IP address and the used port number set as the transmission destination of the communication data as search keys. If the concerned transport routing setting information is registered in the transport routing setting table 123, the routing destination determiner 111 acquires the values set in the data items of "interface" and "nexthop" of the transport routing setting information.

Then, the routing destination determiner 111 determines whether the transmission destination is determined in step S1407. If the routing destination determiner 111 determines that the transmission destination is determined in step S1407 (step S1407: YES), the routing destination determiner 111 ends a series of processes illustrated in FIG. 14. On the other hand, if the routing destination determiner 111 determines that the transmission destination is not been determined in step S1407 (step S1407: NO), the routing destination determiner 111 proceeds the sequence to step S1408.

In step S1408, the routing destination determiner 111 refers to the network routing setting table 125, stored in the setting storage unit 120, to attempt to determine the transmission destination of the communication data. Specifically, the routing destination determiner 111 checks whether the concerned network routing setting information is registered in the network routing setting table 125 by using the IP address and the used port number set as the transmission destination of the communication data as search keys. If the concerned network routing setting information is registered in the network routing setting table 125, the routing destination determiner 111 acquires the values set in the data items of "interface" and "nexthop" of the network routing setting information.

Then, the routing destination determiner 111 ends a series of processes illustrated in FIG. 14. As described above, even when the routing destination determiner 111 cannot determine an appropriate transmission destination of the communication data based on the connection table 121, the routing destination determiner 111 can refer to the application routing setting table 122, the network identifier routing setting table 124, the transport routing setting table 123 and the network routing setting table 125 in this order to determine the appropriate transmission destination of the communication data. FIG. 14 illustrates one example of procedures, and the procedure is not limited thereto. For example, the order of referencing the tables may be changed or referencing of one or more of the tables may be omitted.

### Procedure of Acquiring of Setting Value:

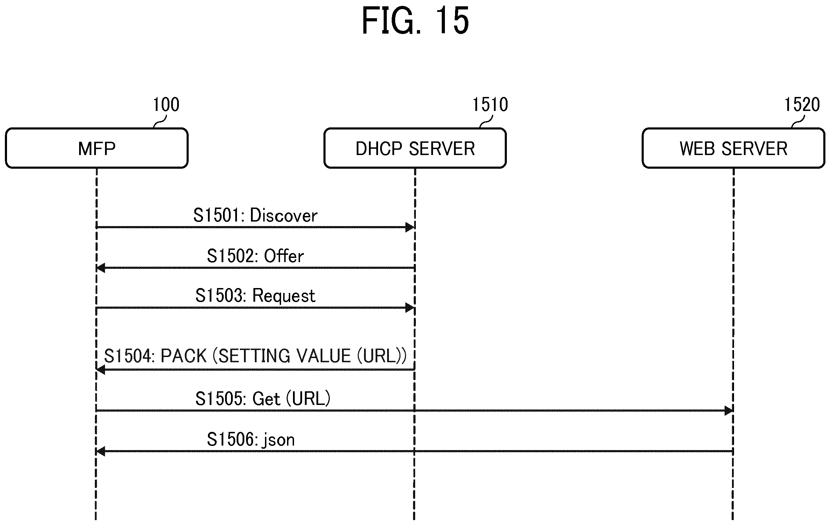

FIG. 15 illustrates a sequence diagram of a procedure of acquiring a setting value in the communication system 10. FIG. 15 illustrates an example case, in which the MFP 100 acquires various routing setting tables from a Web server 1520.

First, the MFP 100 transmits a Discover packet to a dynamic host configuration protocol (DHCP) server 1510 using a broadcast address (step S1501). When the DHCP server 1510 receives the Discover packet, the DHCP server 1510 transmits an Offer packet including an assignable IP address to the MFP 100 (step S1502).

After the MFP 100 receives the Offer packet and checks the IP address included in the Offer packet, the MFP 100 transmits a Request packet to the DHCP server 1510 for requesting the checked IP address (step S1503). When the DHCP server1510 receives the Request packet, the DHCP server 1510 transmits a Pack packet including a formally assigned IP address to the MFP 100 (step S1504). After the MFP 100 receives the Pack packet, the MFP 100 sets the IP address included in the received Pack packet as the IP address of the MFP 100.

Then, the MFP 100 requests various routing setting tables to the Web server 1520 using the Get method (step S1505). After the Web server 1520 receives the Get method, the Web server 1520 transmits the various routing setting tables to the MFP 100 in a given format such as JavaScript Object Notation (JSON) format (step S1506).

As described above, the MFP 100 can acquire the various routing setting tables from an external server, such as the Web server 1520, and set the acquired routing setting tables in the setting storage unit 120. The various routing setting tables transmitted from the external server may be described in the JSON format or other formats, such as Extensible Markup Language (XML) format.

As to the MFP 100 of the above described embodiment, even when the MFP 100 cannot determine the routing destination by referencing to the connection table 121 when to transmit the communication data, the MFP 100 can sequentially refer to various routing tables (e.g., application routing setting table 122, transport routing setting table 123, network identifier routing setting table 124, network routing setting table 125) to determine the network used as the routing destination of the communication data, and can transmit the communication data to the network determined as the routing destination. Therefore, as to the MFP 100 of the above described embodiment, even when a plurality of network devices having the same IP address exists on a plurality of networks connected to the MFP 100, the MFP 100 can transmit the communication data to an appropriate network device.

The known communication control methods includes, for example, the static routing method, the auto last hop method, and the virtual routing and forwarding (VRF) method, and any one of the communication control methods can be effectively used for the MFP 100 of the above described embodiment.

When the static routing method is employed in conventional information processing apparatuses, and a plurality of network devices having the same IP address exists on a plurality of networks connected to an information processing apparatus, communication data may be transmitted to a network interface in accordance with the priority order of the matching process of the static routing method (e.g., longest match algorithm), in which there is a possibility that the communication data is not transmitted to an appropriate transmission destination. By contrast, the MFP 100 of the embodiment can transmit the communication data to an appropriate transmission destination even when a plurality of network devices having the same IP address exists on a plurality of networks connected to the MFP 100.

When the auto last hop method is employed in conventional information processing apparatuses, and an information processing apparatus used as a server transmits the communication data, the information processing apparatus can transmit communication data (e.g., response data) to a transmission source that has requested the data with reference to a connection table. However, when the information processing apparatus used as a client transmits the communication data, the communication control method of the auto last hop method is same as the communication control method of the static routing method, and thereby the information processing apparatus may not transmit the communication data to an appropriate transmission destination. By contrast, the MFP 100 of the embodiment can transmit the communication data to an appropriate transmission destination when the MFP 100 used as the server that transmits the communication data, and when the MFP 100 used as the client that transmits the communication data.

When the VRF method is employed in conventional information processing apparatuses, the transmission destination of the communication data cannot be determined unless an application determines to which router (e.g., router configured by VRF function) the communication data is to be transmitted. Therefore, as to conventional information processing apparatuses, if a plurality of network devices having the same IP address exists on a plurality of networks connected to the information processing apparatus, the information processing apparatus cannot transmit the communication data to an appropriate transmission destination. By contrast, the MFP 100 of the embodiment can transmit the communication data to an appropriate transmission destination even when a plurality of network devices having the same IP address exists on a plurality of networks connected to the MFP 100.

As to the above described embodiment, the communication data can be effectively transmitted to an appropriate network device from an information processing apparatus connectable to a plurality of networks.

The above described embodiment is just illustrative one, and does not limit the present invention. Thus, numerous additional modifications and variations are possible in light of the above teachings. For example, elements and/or features of different illustrative embodiments may be combined with each other and/or substituted for each other within the scope of the present invention.

For example, the above described embodiment is applied to one information processing apparatus or image processing apparatus such as the MFP, but not limited thereto. For example, the above described embodiment can be applied to other image processing apparatuses such as printers, scanners, and projectors. Further, the above described embodiment is applicable not only to the image processing apparatus but also to any types of information processing apparatuses that are connectable to a plurality of networks.

Although the functions of the communication system of the above described embodiment are implemented by one single apparatus such as the MFP 100, the implementation of the functions of the communication system is not limited to one single apparatus. For example, the functions of the communication system of the above described embodiment can be implemented by using a plurality of apparatuses.

Further, the MFP 100 stores a plurality of tables in the above embodiment, but the configuration is not limited thereto. For example, a part or all of the plurality of tables can be stored in one or more external network devices such as one or more Web servers, which are accessible from the MFP 100.

Each of the functions of the above described embodiments can be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), system on a chip (SOC), graphics processing unit (GPU), and conventional circuit components arranged to perform the recited functions.

As described above, the present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any storage medium or carrier means for storing processor readable code such as a floppy disk, hard disk, CD ROM, magnetic tape device or solid state memory device.

## Claims

1. An information processing apparatus (100) connectable to a plurality of networks (Net_A, Net_B, Net_C), comprising:
circuitry (110) adapted to determine, when communication data is to be transmitted to a network device (PC, SV, R) connected to the information processing apparatus (100) via at least one of the plurality of networks (Net_A, Net_B, Net_C), a network (Net_A, Net_B, Net_C) of a routing destination of the communication data to be transmitted to the network device,
the determination comprising:
selecting a registered user of a transmission destination of the communication data from one or more users registered in an address book by an application;
determining, based on setting information set for the registered user, a network (Net_A, Net_B, Net_C) associated with the registered user; and
setting the network (Net_A, Net_B, Net_C) associated with the registered user as the network (Net_A, Net_B, Net_C) of the routing destination;
and
transmit the communication data to the network (Net_A, Net_B, Net_C) determined as the routing destination,
wherein address information and information specifying the transmission destination of the communication data can be registered in the address book for each registered user via a setting screen displayed on a display (206) of the information processing apparatus (100) or a display of a network device connected to the information processing apparatus (100).

2. The information processing apparatus (100) of claim 1,
wherein the circuitry (110) determines the network (Net_A, Net_B, Net_C) of the routing destination based on a connection table (121) used for managing a plurality of communication connection routes,
wherein when the circuitry (110) fails to determine the network (Net_A, Net_B, Net_C) of the routing destination based on the connection table (121), the circuitry (110) determines the network (Net_A, Net_B, Net_C) associated with the registered user of the transmission destination as the network (Net_A, Net_B, Net_C) of the routing destination.

3. The information processing apparatus (100) of claim 1 or claim 2, wherein the circuitry (110) refers to setting information associated with at least one of a user name of the registered user of the transmission destination and a user group name where the registered user of the transmission destination belongs, to determine the network (Net_A, Net_B, Net_C) associated with the registered user of the transmission destination as the network (Net_A, Net_B, Net_C) of the routing destination.

4. The information processing apparatus (100) of claim 3,
wherein when the setting information is set with a network identifier, the circuitry (110) determines a network (Net_A, Net_B, Net_C) associated with the network identifier as the network of the routing destination.

5. The information processing apparatus (100) of claim 4,
wherein when the network identifier is associated with the plurality of networks (Net_A, Net_B, Net_C) by setting a priority order for the plurality of networks (Net_A, Net_B, Net_C), the circuitry determines the network (Net_A, Net_B, Net_C) of the routing destination from the plurality of networks (Net_A, Net_B, Net_C) in accordance with the priority order.

6. The information processing apparatus (100) of any one of claims 1 to 5,
wherein the circuitry (110) further determines an address of a next hop associated with the registered user of the transmission destination, and then the circuitry (110) transmits the communication data to the network (Net_A, Net_B, Net_C) and the next hop determined as the routing destination.

7. A communication system (10) provided with an information processing apparatus (100) connectable to a plurality of networks (Net_A, Net_B, Net_C), the communication system (10) comprising:
circuitry (110) adapted to determine, when communication data is to be transmitted to a network device (PC, SV, R) from the information processing apparatus (100) via at least one of the plurality of networks (Net_A, Net_B, Net_C), a network (Net_A, Net_B, Net_C) of a routing destination of the communication data to be transmitted to the network device,
wherein address information and information specifying the transmission destination of the communication data can be registered in the address book for each registered user via a setting screen displayed on a display (206) of the information processing apparatus (100) or a display of a network device connected to the information processing apparatus (100),
the determination comprising:
selecting a registered user of a transmission destination of the communication data from one or more users registered in an address book by an application;
determining, based on setting information set for the registered user, a network (Net_A, Net_B, Net_C) associated with the registered user; and
setting the network (Net_A, Net_B, Net_C) associated with the registered user as the network (Net_A, Net_B, Net_C) of the routing destination; and
transmit the communication data to the network (Net_A, Net_B, Net_C) determined as the routing destination,
wherein address information and information specifying the transmission destination of the communication data can be registered in the address book via a setting screen displayed on a display of the information processing apparatus (100) or a display of a network device connected to the information processing apparatus (100).

8. A method of controlling a communication route for an information processing apparatus (100) connectable to a plurality of networks (Net_A, Net_B, Net_C), the method comprising:
registering address information and information specifying the transmission destination of the communication data in the address book for one or more users via a setting screen displayed on a display (206) of the information processing apparatus (100) or a display of a network device connected to the information processing apparatus (100);
determining, when communication data is to be transmitted to a network device (PC, SV, R) connected to the information processing apparatus (100) via at least one of the plurality of networks (Net_A, Net_B, Net_C), a network (Net_A, Net_B, Net_C) of a routing destination of the communication data to be transmitted to the network device,
the determination comprising:
selecting a registered user of a transmission destination of the communication data from one or more users registered in an address book by an application;
determining, based on setting information set for the registered user, a network (Net_A, Net_B, Net_C) associated with the registered user; and
setting the network (Net_A, Net_B, Net_C) associated with the registered user as the network (Net_A, Net_B, Net_C) of the routing destination;
and
transmitting the communication data to the network (Net_A, Net_B, Net_C) determined as the routing destination.

9. A carrier means comprising computer readable code that when executed by a computer carry out the method of claim 8.

## Patentansprüche

1. Informationsverarbeitungsvorrichtung (100), verbindbar mit einer Vielzahl von Netzwerken (Net_A, Net_B, Net_C), umfassend:
Schaltkreise (110), angepasst zum
Bestimmen, wenn Kommunikationsdaten über mindestens eines der Vielzahl von Netzwerken (Net_A, Net_B, Net_C) an eine mit der Informationsverarbeitungsvorrichtung (100) verbundene Netzwerkvorrichtung (PC, SV, R) zu übertragen sind, eines Netzwerks (Net_A, Net_B, Net_C) eines Routenführungsziels der an die Netzwerkvorrichtung zu übertragenden Kommunikationsdaten,
die Bestimmung umfassend:
Auswählen eines registrierten Benutzers eines Übertragungsziels der Kommunikationsdaten aus einem oder mehreren durch eine Anwendung in einem Adressbuch registrierten Benutzern;
Bestimmen, basierend auf für den registrierten Benutzer eingestellten Einstellungsinformationen, eines mit dem registrierten Benutzer assoziierten Netzwerks (Net_A, Net_B, Net_C);
und
Einstellen des mit dem registrierten Benutzer assoziierten Netzwerks (Net_A, Net_B, Net_C) als das Netzwerk (Net_A, Net_B, Net_C) des Routenführungsziels; und
Übertragen der Kommunikationsdaten an das als das Routenführungsziel bestimmte Netzwerk (Net_A, Net_B, Net_C),
wobei Adressinformationen und Informationen, die das Übertragungsziel der Kommunikationsdaten spezifizieren, in dem Adressbuch für jeden registrierten Benutzer über einen Einstellungsbildschirm, der auf einer Anzeige (206) der Informationsverarbeitungsvorrichtung (100) oder einer Anzeige einer mit der Informationsverarbeitungsvorrichtung (100) verbundenen Netzwerkvorrichtung angezeigt wird, registriert werden können.

2. Informationsverarbeitungsvorrichtung (100) nach Anspruch 1,
wobei die Schaltkreise (110) das Netzwerk (Net_A, Net_B, Net_C) des Routenführungsziels basierend auf einer Verbindungstabelle (121), die zum Verwalten einer Vielzahl von Kommunikationsverbindungsrouten verwendet wird, bestimmen,
wobei, wenn die Schaltkreise (110) das Netzwerk (Net_A, Net_B, Net_C) des Routenführungsziels basierend auf der Verbindungstabelle (12) nicht bestimmen, die Schaltkreise (110) das mit dem registrierten Benutzer des Übertragungsziels assoziierte Netzwerk (Net_A, Net_B, Net_C) als das Netzwerk (Net_A, Net_B, Net_C) des Routenführungsziels bestimmen.

3. Informationsverarbeitungsvorrichtung (100) nach Anspruch 1 oder Anspruch 2,
wobei die Schaltkreise (110) sich auf Einstellungsinformationen beziehen, assoziiert mit mindestens einem eines Benutzernamens des registrierten Benutzers des Übertragungsziels und eines Benutzergruppennamens, zu dem der registrierte Benutzer des Übertragungsziels gehört, um das mit dem registrierten Benutzer des Übertragungsziels assoziierte Netzwerk (Net_A, Net_B, Net_C) als das Netzwerk (Net_A, Net_B, Net_C) des Routenführungsziels zu bestimmen.

4. Informationsverarbeitungsvorrichtung (100) nach Anspruch 3,
wobei, wenn die Einstellungsinformationen mit einer Netzwerkkennung eingestellt sind, die Schaltkreise (110) ein mit der Netzwerkkennung assoziiertes Netzwerk (Net_A, Net_B, Net_C) als das Netzwerk des Routenführungsziels bestimmen.

5. Informationsverarbeitungsvorrichtung (100) nach Anspruch 4,
wobei, wenn die Netzwerkkennung mit der Vielzahl von Netzwerken (Net_A, Net_B, Net_C) durch Einstellen einer Prioritätsfolge für die Vielzahl von Netzwerken (Net_A, Net_B, Net_C) assoziiert ist, die Schaltkreise das Netzwerk (Net_A, Net_B, Net_C) des Routenführungsziels aus der Vielzahl von Netzwerken (Net_A, Net_B, Net_C) gemäß der Prioritätsfolge bestimmen.

6. Informationsverarbeitungsvorrichtung (100) nach einem der Ansprüche 1 bis 5,
wobei die Schaltkreise (110) ferner eine Adresse eines mit dem registrierten Benutzer des Übertragungsziels assoziierten nächsten Sprungs bestimmen und dann die Schaltkreise (110) die Kommunikationsdaten an das Netzwerk (Net_A, Net_B, Net_C) und den als das Routenführungsziel bestimmten nächsten Sprung übertragen.

7. Kommunikationssystem (10), versehen mit einer Informationsverarbeitungsvorrichtung (100), verbindbar mit einer Vielzahl von Netzwerken (Net_A, Net_B, Net_C), das Kommunikationssystem (10) umfassend:
Schaltkreise (110), angepasst zum Bestimmen, wenn Kommunikationsdaten über mindestens eines der Vielzahl von Netzwerken (Net_A, Net_B, Net_C) an eine Netzwerkvorrichtung (PC, SV, R) von der Informationsverarbeitungsvorrichtung (100) zu übertragen sind, eines Netzwerks (Net_A, Net_B, Net_C) eines Routenführungsziels der an die Netzwerkvorrichtung zu übertragenden Kommunikationsdaten,
wobei Adressinformationen und Informationen, die das Übertragungsziel der Kommunikationsdaten spezifizieren, in dem Adressbuch für jeden registrierten Benutzer über einen Einstellungsbildschirm, der auf einer Anzeige (206) der Informationsverarbeitungsvorrichtung (100) oder einer Anzeige einer mit der Informationsverarbeitungsvorrichtung (100) verbundenen Netzwerkvorrichtung angezeigt wird, registriert werden können,
die Bestimmung umfassend:
Auswählen eines registrierten Benutzers eines Übertragungsziels der Kommunikationsdaten aus einem oder mehreren durch eine Anwendung in einem Adressbuch registrierten Benutzern;
Bestimmen, basierend auf für den registrierten Benutzer eingestellten Einstellungsinformationen, eines mit dem registrierten Benutzer assoziierten Netzwerks (Net_A, Net_B, Net_C); und
Einstellen des mit dem registrierten Benutzer assoziierten Netzwerks (Net_A, Net_B, Net_C) als das Netzwerk (Net_A, Net_B, Net_C) des Routenführungsziels;
und
Übertragen der Kommunikationsdaten an das als das Routenführungsziel bestimmte Netzwerk (Net_A, Net_B, Net_C),
wobei Adressinformationen und Informationen, die das Übertragungsziel der Kommunikationsdaten spezifizieren, in dem Adressbuch über einen Einstellungsbildschirm, der auf einer Anzeige der Informationsverarbeitungsvorrichtung (100) oder einer Anzeige einer mit der Informationsverarbeitungsvorrichtung (100) verbundenen Netzwerkvorrichtung angezeigt wird, registriert werden können.

8. Verfahren zum Steuern einer Kommunikationsroute für eine Informationsverarbeitungsvorrichtung (100), verbindbar mit einer Vielzahl von Netzwerken (Net_A, Net_B, Net_C), das Verfahren umfassend:
Registrieren von Adressinformationen und Informationen, die das Übertragungsziel der Kommunikationsdaten spezifizieren, in dem Adressbuch für einen oder mehrere Benutzer über einen Einstellungsbildschirm, der auf einer Anzeige (206) der Informationsverarbeitungsvorrichtung (100) oder einer Anzeige einer mit der Informationsverarbeitungsvorrichtung (100) verbundenen Netzwerkvorrichtung angezeigt wird;
Bestimmen, wenn Kommunikationsdaten über mindestens eines der Vielzahl von Netzwerken (Net_A, Net_B, Net_C) an eine mit der Informationsverarbeitungsvorrichtung (100) verbundene Netzwerkvorrichtung (PC, SV, R) zu übertragen sind, eines Netzwerks (Net_A, Net_B, Net_C) eines Routenführungsziels der an die Netzwerkvorrichtung zu übertragenden Kommunikationsdaten, die Bestimmung umfassend:
Auswählen eines registrierten Benutzers eines Übertragungsziels der Kommunikationsdaten aus einem oder mehreren durch eine Anwendung in einem Adressbuch registrierten Benutzern;
Bestimmen, basierend auf für den registrierten Benutzer eingestellten Einstellungsinformationen, eines mit dem registrierten Benutzer assoziierten Netzwerks (Net_A, Net_B, Net_C);
und
Einstellen des mit dem registrierten Benutzer assoziierten Netzwerks (Net_A, Net_B, Net_C) als das Netzwerk (Net_A, Net_B, Net_C) des Routenführungsziels; und
Übertragen der Kommunikationsdaten an das als das Routenführungsziel bestimmte Netzwerk (Net_A, Net_B, Net_C).

9. Trägermittel, umfassend computerlesbaren Code, der, wenn er durch einen Computer ausgeführt wird, das Verfahren nach Anspruch 8 ausführt.

## Revendications

1. Appareil de traitement d'information (100) pouvant être connecté à une pluralité de réseaux (Net_A, Net_B, Net_C), comprenant :
un circuit (110) qui est adapté pour réaliser les actions qui suivent :
la détermination, lorsque des données de communication doivent être transmises à un dispositif de réseau (PC, SV, R) qui est connecté à l'appareil de traitement d'information (100) via au moins l'un de la pluralité de réseaux (Net_A, Net_B, Net_C), d'un réseau (Net_A, Net_B, Net_C) d'une destination de routage des données de communication qui doivent être transmises au dispositif de réseau,
la détermination comprenant :
la sélection d'un utilisateur enregistré d'une destination de transmission des données de communication parmi un ou plusieurs utilisateur(s) qui est/sont enregistré(s) à l'intérieur d'un carnet d'adresses par une application ;
la détermination, sur la base d'une information d'instauration qui est instaurée pour l'utilisateur enregistré, d'un réseau (Net_A, Net_B, Net_C) qui est associé à l'utilisateur enregistré ; et
l'instauration du réseau (Net_A, Net_B, Net_C) qui est associé à l'utilisateur enregistré en tant que réseau (Net_A, Net_B, Net_C) de la destination de routage ;
et
la transmission des données de communication au réseau (Net_A, Net_B, Net_C) qui est déterminé en tant que destination de routage ;
dans lequel une information d'adresse et une information qui spécifie la destination de transmission des données de communication peuvent être enregistrées à l'intérieur du carnet d'adresses pour chaque utilisateur enregistré via un écran d'instauration qui est affiché sur un affichage (206) de l'appareil de traitement d'information (100) ou via un affichage d'un dispositif de réseau qui est connecté à l'appareil de traitement d'information (100).

2. Appareil de traitement d'information (100) selon la revendication 1,
dans lequel le circuit (110) détermine le réseau (Net_A, Net_B, Net_C) de la destination de routage sur la base d'une table de connexions (121) qui est utilisée pour gérer une pluralité de voies de connexion de communication ;
dans lequel, lorsque le circuit (110) échoue à déterminer le réseau (Net_A, Net_B, Net_C) de la destination de routage sur la base de la table de connexions (121), le circuit (110) détermine le réseau (Net_A, Net_B, Net_C) qui est associé à l'utilisateur enregistré de la destination de transmission en tant que réseau (Net_A, Net_B, Net_C) de la destination de routage.

3. Appareil de traitement d'information (100) selon la revendication 1 ou la revendication 2,
dans lequel le circuit (110) se réfère à une information d'instauration qui est associée à au moins un nom pris parmi un nom d'utilisateur de l'utilisateur enregistré de la destination de transmission et un nom de groupe d'utilisateurs du groupe auquel l'utilisateur enregistré de la destination de transmission appartient, pour déterminer le réseau (Net_A, Net_B, Net_C) qui est associé à l'utilisateur enregistré de la destination de transmission en tant que réseau (Net_A, Net_B, Net_C) de la destination de routage.

4. Appareil de traitement d'information (100) selon la revendication 3,
dans lequel, lorsque l'information d'instauration est instaurée à l'aide d'un identifiant de réseau, le circuit (110) détermine un réseau (Net_A, Net_B, Net_C) qui est associé à l'identifiant de réseau en tant que réseau de la destination de routage.

5. Appareil de traitement d'information (100) selon la revendication 4,
dans lequel, lorsque l'identifiant de réseau est associé à la pluralité de réseaux (Net_A, Net_B, Net_C) en instaurant un ordre de priorité pour la pluralité de réseaux (Net_A, Net_B, Net_C), le circuit détermine le réseau (Net_A, Net_B, Net_C) de la destination de routage parmi la pluralité de réseaux (Net_A, Net_B, Net_C) en fonction de l'ordre de priorité.

6. Appareil de traitement d'information (100) selon l'une quelconque des revendications 1 à 5,
dans lequel le circuit (110) détermine en outre une adresse d'un bond suivant qui est associé à l'utilisateur enregistré de la destination de transmission, puis le circuit (110) transmet les données de communication au réseau (Net_A, Net_B, Net_C) et au bond suivant qui sont déterminés en tant que destination de routage.

7. Système de communication (10) muni d'un appareil de traitement d'information (100) qui peut être connecté à une pluralité de réseaux (Net_A, Net_B, Net_C), le système de communication (10) comprenant :
un circuit (110) qui est adapté pour réaliser les actions qui suivent : la détermination, lorsque des données de communication doivent être transmises à un dispositif de réseau (PC, SV, R) depuis l'appareil de traitement d'information (100) via au moins l'un de la pluralité de réseaux (Net_A, Net_B, Net_C), d'un réseau (Net_A, Net_B, Net_C) d'une destination de routage des données de communication qui doivent être transmises au dispositif de réseau ;
dans lequel une information d'adresse et une information qui spécifie la destination de transmission des données de communication, peuvent être enregistrées à l'intérieur du carnet d'adresses pour chaque utilisateur enregistré via un écran d'instauration qui est affiché sur un affichage (206) de l'appareil de traitement d'information (100) ou via un affichage d'un dispositif de réseau qui est connecté à l'appareil de traitement d'information (100),
la détermination comprenant :
la sélection d'un utilisateur enregistré d'une destination de transmission des données de communication parmi un ou plusieurs utilisateur(s) qui est/sont enregistré(s) à l'intérieur d'un carnet d'adresses par une application ;
la détermination, sur la base d'une information d'instauration qui est instaurée pour l'utilisateur enregistré, d'un réseau (Net_A, Net_B, Net_C) qui est associé à l'utilisateur enregistré ; et
l'instauration du réseau (Net_A, Net_B, Net_C) qui est associé à l'utilisateur enregistré en tant que réseau (Net_A, Net_B, Net_C) de la destination de routage ;
et
la transmission des données de communication au réseau (Net_A, Net_B, Net_C) qui est déterminé en tant que destination de routage ;
dans lequel une information d'adresse et une information qui spécifie la destination de transmission des données de communication peuvent être enregistrées à l'intérieur du carnet d'adresses via un écran d'instauration qui est affiché sur un affichage de l'appareil de traitement d'information (100) ou via un affichage d'un dispositif de réseau qui est connecté à l'appareil de traitement d'information (100).

8. Procédé de commande d'une voie de communication pour un appareil de traitement d'information (100) qui peut être connecté à une pluralité de réseaux (Net_A, Net_B, Net_C), le procédé comprenant :
l'enregistrement d'une information d'adresse et d'une information qui spécifie la destination de transmission des données de communication à l'intérieur du carnet d'adresses pour un ou plusieurs utilisateur(s) via un écran d'instauration qui est affiché sur un affichage (206) de l'appareil de traitement d'information (100) ou via un affichage d'un dispositif de réseau qui est connecté à l'appareil de traitement d'information (100) ;
la détermination, lorsque des données de communication doivent être transmises à un dispositif de réseau (PC, SV, R) qui est connecté à l'appareil de traitement d'information (100) via au moins l'un de la pluralité de réseaux (Net_A, Net_B, Net_C), d'un réseau (Net_A, Net_B, Net_C) d'une destination de routage des données de communication qui doivent être transmises au dispositif de réseau, la détermination comprenant :
la sélection d'un utilisateur enregistré d'une destination de transmission des données de communication parmi un ou plusieurs utilisateur(s) qui est/sont enregistré(s) à l'intérieur d'un carnet d'adresses par une application ;
la détermination, sur la base d'une information d'instauration qui est instaurée pour l'utilisateur enregistré, d'un réseau (Net_A, Net_B, Net_C) qui est associé à l'utilisateur enregistré ; et
l'instauration du réseau (Net_A, Net_B, Net_C) qui est associé à l'utilisateur enregistré en tant que réseau (Net_A, Net_B, Net_C) de la destination de routage ;
et
la transmission des données de communication au réseau (Net_A, Net_B, Net_C) qui est déterminé en tant que destination de routage.

9. Moyen de support comprenant un code qui peut être lu par un ordinateur et qui, lorsqu'il est exécuté par un ordinateur, met en œuvre le procédé selon la revendication 8.
